(19) **Europäisches Patentamt / European Patent Office / Office européen des brevets**

(11) **EP 2 796 597 B1**

(12) **EUROPEAN PATENT SPECIFICATION**

(45) Date of publication and mention
of the grant of the patent:
**13.06.2018 Bulletin 2018/24**

(51) Int Cl.:
*C03B 37/05* (2006.01)  *C03B 37/10* (2006.01)
*C03B 37/16* (2006.01)  *B07B 9/00* (2006.01)
*B07B 1/00* (2006.01)  *B03B 5/48* (2006.01)
*C03C 13/06* (2006.01)  *C03C 3/078* (2006.01)
*C03C 3/085* (2006.01)  *C04B 35/14* (2006.01)

(21) Application number: **12859735.8**

(22) Date of filing: **13.11.2012**

(86) International application number:
**PCT/JP2012/007285**

(87) International publication number:
**WO 2013/094113 (27.06.2013 Gazette 2013/26)**

(54) **BIO-SOLUBLE INORGANIC FIBER AND METHOD FOR PRODUCING SAME**

BIOLÖSLICHE ANORGANISCHE FASER UND VERFAHREN ZU IHRER HERSTELLUNG

FIBRE INORGANIQUE BIOSOLUBLE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2011 JP 2011282458**

(43) Date of publication of application:
**29.10.2014 Bulletin 2014/44**

(73) Proprietor: **Nichias Corporation Tokyo 104-8555 (JP)**

(72) Inventors:
 • **NAKAJIMA, Takashi**
 **Tokyo 1048555 (JP)**
 • **YONAIYAMA, Ken**
 **Tokyo 1048555 (JP)**
 • **MIHARA, Tetsuya**
 **Tokyo 1048555 (JP)**
 • **KISHIKI, Tomohiko**
 **104-8555 Tokyo (JP)**

(74) Representative: **Schmitz, Joseph Isler & Pedrazzini AG Giesshübelstrasse 45 Postfach 1772 8027 Zürich (CH)**

(56) References cited:
EP-A1- 2 692 915        EP-B1- 1 725 503
WO-A1-2007/080975       JP-A- H0 543 265
JP-A- H04 108 165       JP-A- 2005 515 307
JP-A- 2010 013 773      JP-A- 2010 202 983
JP-A- 2011 016 877      JP-A- 2011 501 017
US-A- 5 125 942         US-A- 5 332 699
US-A1- 2004 254 056     US-A1- 2010 207 298

**Description**

Technical Field

The invention relates to biosoluble inorganic fibers containing a small amount of shots and a method for producing the same.

Background Art

Normally, in inorganic fibers produced by the melting method, masses in the form of a particle called shots are mixed in. Shots are non-fibrous particles that remain in the form of particles without becoming fibers.

When a heat-insulating material is produced by using inorganic fibers, shots that have been mixed in the inorganic fibers deteriorate the heat insulating properties.

Further, it is known that, if a friction board (brake pat) is produced by using inorganic fibers as disclosed in Patent Documents 1 and 2, shots cause brake noises or abnormal sounds.

As for the secondary products obtained by using these inorganic fibers, if shots are mixed in, the shots cause the heat insulating performance to be deteriorated, and in the case of a thin product such as paper, the shots cause the strength to be lowered, various properties to be deteriorated (e.g. the surface texture to be deteriorated) or cause other problems.

Under such circumstances, there has been a strong demand for removing shots from inorganic fibers.

On the other hand, inorganic fibers are scattered in the air as dust during the production, use, disposal or the like. There is a concern that, if a worker inhales this dust, the dust invades the lung to cause health problems. For this reason, as the inorganic fibers, biosoluble fibers are used.

As the method for reducing the amount of shots from ceramic fibers, Patent Document 2 discloses a method in which fibers are disentangled in a swirling current to separate the shots. However, since biosoluble fibers are not as hard and thin as ceramic fibers, it is difficult to remove shots therefrom.

Related Art Documents

Patent Documents

Patent Document 1: JP-A-2011-16877
Patent Document 2: JP-A-S63-57931

US5332699 A discloses inorganic fibers containing $SiO_2$, MgO, CaO and at least one of $Al_2O_3$, $ZrO_2$, $TiO_2$, $B_2O_3$, iron oxides and combinations thereof, and in whose manufacturing process a shots content of 27 wt% on average is yielded.

US2004254056 A1 discloses inorganic fibers containing $SiO_2$, MgO, CaO, $Al_2O_3$, $ZrO_2$, $B_2O_3$, and $P_2O_5$ where the total of $SiO_2$, MgO, CaO, $Al_2O_3$, $ZrO_2$, $B_2O_3$, and $P_2O_5$ is less than 95 wt% and where the inorganic fibers contain some amount of shots.

EP1725503 B1 discloses inorganic fibers, in particular refractory alkaline earth silicate fibers comprising predominantly silica and alkaline earth oxides and less than 10 wt% alumina for which the amount of shots was reduced from about 51 wt% to about 48 wt% by addition of sodium oxide.

US2010207298 A1 discloses inorganic fibers comprising $SiO_2$, MgO, CaO, $Al_2O_3$, and $B_2O_3$ for use in the manufacture of mounting mats for pollution control devices, in which the shots content of the inorganic fibers is reduced within the manufacturing process in a sole step which may be sieving or centrifugation, without however disclosing the obtained reduced shots content.

US5125942 A discloses a process for the production of mineral wool fibres with low shot content by blast drying.

Summary of the Invention

An object of the invention is to provide inorganic fibers having a small amount of shots and having excellent fire resistance and biosolubility, and a method for producing the same.

According to the invention, the following inorganic fibers are provided:
1. Inorganic fibers having a composition ratio of

| SiO$_2$ | 66 to 82 wt%; |
| CaO | 10 to 34 wt%; |
| MgO | 0 to 3 wt%; |
| Al$_2$O$_3$ | 0 to 5 wt%; |

the total of SiO$_2$, CaO, MgO and Al$_2$O$_3$ being 98 wt% or more, and comprising 1 wt% or less of shots each having a diameter of 45 $\mu$m or more.

2. The inorganic fibers according to 1 having an average fiber length of 10 $\mu$m or more.

3. The inorganic fibers according to 1 or 2 having a bulk density of 50 to 500 kg/m$^3$.

4. A method for producing inorganic fibers having a composition ratio of

| SiO$_2$ | 66 to 82 wt%; |
| CaO | 10 to 34 wt%; |
| MgO | 0 to 3 wt%; |
| Al$_2$O$_3$ | 0 to 5 wt%; |

the total of SiO$_2$, CaO, MgO and Al$_2$O$_3$ being 98 wt% or more, and comprising 40 wt% or less of shots each having a diameter of 45 $\mu$m or more, the method comprising:

a step of producing raw material inorganic fiber;
a step of pulverizing the raw material inorganic fiber by means of a pulverizing mill or a press; and
a step of removing shots from the pulverized raw material inorganic fiber by one or more selected from air classification, water sieving, sieving and pulverizing.

5. The method for producing inorganic fibers according to 4, wherein the shots are removed from the pulverized raw material inorganic fiber by
air classification,
air classification and water sieving, or
air classification and sieving.

6. The method for producing inorganic fibers according to 4 or 5, wherein the inorganic fibers have 1 wt% or less of the shots.

7. The method for producing inorganic fibers according to any of 4 to 6, wherein, in the step of producing raw material inorganic fiber, the raw material inorganic fiber is produced by melting a raw material by a spinning method at a temperature ranging from higher than 1700°C to 2200°C or less.

According to the invention, it is possible to provide inorganic fibers having a small amount of shots and having excellent fire resistance and biosolubility, and a method for producing the same.

Mode for Carrying out the Invention

The inorganic fiber of the invention have the following composition ratio.

| SiO$_2$ | 66 to 82 wt% (it can be 68 to 82 wt%, 70 to 82 wt%, 70 to 80 wt%, 71 to 80 wt% or 71.25 to 76 wt%, for example) |
| CaO | 10 to 34 wt% (it can be 18 to 30 wt%, 20 to 27 wt% or 21 to 26 wt%, for example) |
| MgO 3 | wt% or less (it can be 1 wt% or less, for example) |
| Al$_2$O$_3$ | 5 wt% or less (it can be 3.4 wt% or less or 3 wt% or less, for example, or, it can be 0.1 wt% or more, 0.5 wt% or more, 1.1 wt% or more or 2.0 wt% or more) |
| Other oxides | less than 2 wt% |

If SiO$_2$ is in the above-mentioned range, the inorganic fibers have excellent heat resistance. If CaO and MgO are in the above-mentioned range, the inorganic fiber has excellent biosolubility before and after heating. If Al$_2$O$_3$ is in the above-mentioned range, the inorganic fibers have excellent heat resistance.

The total of SiO$_2$, CaO, MgO and Al$_2$O$_3$ may be larger than 98 wt% or larger than 99 wt%.

The above-mentioned inorganic fiber may or may not include, as other oxides, one or more selected from alkali metal oxides ($K_2O$, $Na_2O$ or the like), $Fe_2O_3$, $ZrO_2$, $TiO_2$, $P_2O_5$, $B_2O_3$, $R_2O_3$(R is selected from Sc, La, Ce, Pr, Nd, Sm, Eu, Gd, Tb, Dy, Ho, Er, Tm, Yb, Lu, Y or a mixture thereof). The amounts of other oxides may be 0.2 wt% or less or 0.1 wt% or less.

The amount of alkali metal oxides may be 0.2 wt% or less, 0.15 wt% or less or 0.1 wt% or less. As for the alkali metal oxides, the amount of each oxide may be 0.2 wt% or less, or may be 0.1 wt% or less. The total of alkali metal oxides may be 0.2 wt% or less. The alkali metal oxide may be contained in an amount of more than 0.01 wt%, 0.05 wt% or more or 0.08 wt% or more.

$K_2O$ may or may not be contained. If contained, the amount thereof may be 0.2 wt% or less, 0.15 wt% or less or 0.1 wt% or less. $K_2O$ may be contained in an amount of more than 0.01 wt%, 0.05 wt% or more or 0.08 wt% or more.

$Na_2O$ may or may not be contained. If contained, the amount thereof may be 0.2 wt% or less, 0.15 wt% or less or 0.1 wt% or less. $Na_2O$ may be contained in an amount of more than 0.01 wt%, 0.05 wt% or more or 0.08 wt% or more.

The biosoluble inorganic fibers are inorganic fibers having a physiological saline dissolution ratio of 1% or more at 40°C

The physiological saline dissolution ratio can be measured by the following method, for example. That is, first, 1g of the sample obtained by pulverizing the inorganic fibers to a size of 200 meshes or less and 150 mL of physiological saline are put in a conical flask (volume: 300 mL). This flask is placed in an incubator of 40°C, and a horizontal vibration (120 rpm) is continuously applied for 50 hours. Thereafter, the concentration (mg/L) of each element contained in a filtrate obtained by filtration is measured by an ICP emission spectrometry apparatus. Based on the concentration of each element and the content (wt%) of each element in the inorganic fibers before dissolution, the physiological saline dissolution ratio (%) is calculated. Specifically, if the elements to be measured are silicon (Si), magnesium (Mg), calcium (Ca) and aluminum (Al), the physiological saline dissolution ratio C(%) is calculated by the following formula: C(%) = [Amount (L) of filtrate $\times$ (a1 + a2 + a3 + a4) $\times$ 100] / [weight (mg) of inorganic fibers before dissolution $\times$ (b1 + b2 + b3 + b4) / 100]. In this formula, a1, a2, a3 and a4 are respectively the measured concentration (mg/L) of silicon, magnesium, calcium and aluminum, and b1, b2, b3 and b4 are respectively the content (wt%) of silicon, magnesium, calcium and aluminum in the inorganic fibers before dissolution.

The inorganic fibers may be in the form of a bulk or a blanket, and may be subjected to a heat treatment (preferably 850°C or higher, more preferably is equal to or higher than a crystallization temperature).

The amount of shots each having a diameter of 45 $\mu$m or more in the inorganic fiber of the invention may be appropriately controlled according to the application where the fiber is used. The amount is 1 wt% or less, more preferably 0.8 wt% or less, more preferably 0.6 wt% or less.. The size of the shots is normally about 45 $\mu$m or more and less than 3000 $\mu$m.

The content of shots is measured by a method described in the Examples.

In order to allow the content of shots to be in the above-mentioned range, shots are removed by a method mentioned later.

The average fiber length of the inorganic fibers may be appropriately controlled according to the application where it is used, and is not particularly restricted in the invention. The average fiber length of the inorganic fibers is preferably 10 $\mu$m or more, more preferably 50 $\mu$m or more, with 70 $\mu$m or more being further preferable. If the average fiber length is less than 10 $\mu$m, effects as fibers cannot be exhibited easily.

The average fiber length is measured by a method described in the Examples.

In order to allow the average fiber length to be in the above-mentioned range, the fiber length is controlled by a method mentioned later.

The average fiber diameter of the inorganic fiber is normally 2 to 10 $\mu$m, preferably 2 to 7 $\mu$m, further preferably 2 to 6 $\mu$m, more preferably 2 to 5 $\mu$m. If the average fiber diameter is less than 1 $\mu$m, water proofness may be deteriorated since solubility is increased. If the average fiber diameter exceeds 50 $\mu$m, flexibility of the fiber may be deteriorated.

The average fiber diameter is measured by the method described in the Examples.

In order to allow the average fiber diameter to be in the above-mentioned range, the melting temperature, the viscosity, the acceleration rate of a rotor or the like are controlled.

The bulk density of inorganic fiber is affected by each quantity of shots and each quantity of fibers and the distribution of shots and the fiber diameter and the fiber length, and hence, can be controlled by these. The bulk density may be controlled appropriately according to applications where the fiber is used, and is not particularly restricted in the invention. The bulk density is normally 50 to 500 kg/m$^3$, preferably 50 to 400 kg/m$^3$, more preferably 100 to 400 kg/m$^3$, further preferably 110 to 350 kg/m$^3$, and particularly preferably 120 to 350 kg/m$^3$. If the bulk density exceeds 500 kg/m$^3$, the fiber may be pulverized significantly, and the external appearance thereof may be in the form of a particle.

The bulk density is measured by a method described in the Examples.

As for the method for producing the inorganic fiber of the invention, for example, a raw cotton (raw material inorganic fiber) is produced by a common method or by a method described in Japanese Patent Application No. 2011-077940 (spinning method (using 2 or 3 rotors) or the like), and then shots are removed therefrom. At this time, normally, the raw material is molten at a temperature of from higher than 1700°C to 2200°C or less, and the molten raw material is then fed to a rotor. Normally, the raw cotton comprises more than 40 wt% of shots each having a diameter of 45 $\mu$m or more. It is preferred that the fiber length be further controlled after removing shots.

When the fiber length is controlled after removing shots, the fiber may be pulverized in advance, followed by removal of shots, vice versa.

No specific restriction are imposed on the method for pulverizing the fiber. Pulverizing the raw cotton to a desirable size (for example, 30 $\mu$m to 10 cm, preferably 40 $\mu$m to 5 cm, more preferably 50 $\mu$m to 1 cm, and further preferably 50 $\mu$m to 0.5 cm) will suffice. For example, the raw cotton is pulverized by means of a pulverizing mill such as a pin mill and a hammer mill or a press such as a roller press. They may be used in combination.

The pulverizing by using a pin mill is a method in which a raw cotton is pulverized by means of a pin disk. By this method, a raw cotton can be finely pulverized.

The pulverizing by using a hammer mill is a method in which a raw cotton is pulverized by impact or friction by using a swing hammer or a chip hammer. The pulverizing by means of a press is a method in which pressure is applied to raw cotton to pulverize it. By this method, pulverization is controlled easily by pressure.

The pulverizing by using a roller press is a method in which a raw cotton is passed through between the rollers and pressurized. By this method, pulverizing can be controlled by adjusting the clearance between the rollers.

As for the method for removing the shots, usable methods include air classification, water sieving, sieving, pulverizing or the like. These methods may be used in combination.

The air classification is a method in which shots are removed by using air stream. By this method, classification can be conducted while keeping the uniformly-dispersed state. There is no need to use a repulsive force-buffer element.

The water sieving is a method in which the fibers are stirred in water to cause them to separate by sedimentation, and then shots are removed. By this method, the fiber length can be kept long.

The sieving is a method in which shots are removed by allowing them to pass through a sieve. This method has an advantage that shots having an intended size can be easily separated.

The pulverizing is a method in which shots having a diameter of 45 $\mu$m or more are pulverized. This is a method for removing shots such that they become apparently invisible, and use of this method leads to an increase in production yield.

EXAMPLES

Example 1 (Comparative)

A raw cotton containing 73 wt% of $SiO_2$, 24 wt% of CaO, 0.3 wt% of MgO and 2 wt% of $Al_2O_3$ (average fiber diameter: 3.3 $\mu$m) was produced by melting raw materials at a temperature of from higher than 1700°C to 2200°C or lower by a spinning method. This raw cotton was pulverized by means of a cutter, and then subjected to air classification. As for the raw cotton and the resulting inorganic fibers, the following measurement was conducted. The results are shown in Table 1.

(1) Shot content

The shot content was measured in accordance with the following procedures.

(i) From arbitral locations, 100g or more of a sample is cut such that the shots do not drop from the sample.
(ii) The sample thus cut is subjected to a drying treatment at 105 to 110°C for 1 hour, and then weighed. The weight of the sample is taken as $W_0$.
(iii) The sample is put in a cylinder and pulverized by pressurizing at 21 MPa. In the cylinder, the sample was disentangled by means of a spatula. Then, the sample was again pulverized by pressurizing.
(iv) The thus pulverized sample was transferred to a sieve having a normal size of 45 $\mu$m (JIS-Z-8801) and the fiber and small shots are washed with running water.
(v) Shots remained in the sieve are dried together with the sieve for 1 hour by means of a dryer.
(vi) The sieve taken out of the dryer is cooled to room temperature. Small particles adhering to the back surface of the sieve is removed by patting the side surface of the sieve by hands for about 10 seconds.
(vii) The shots remained on the sieve surface are transferred to an appropriate apparatus. At this time, the shots are sufficiently shaken off by means of a sieve brush such that they do not remain on the sieve, and the separated shots are weighed and the weight thereof is taken as $W_1$.
(viii) The content of shots is obtained by the following formula, and the value is rounded to one digit after the decimal point.

$$\text{Shot content \%} = W_1/W_0 \times 100$$

(2) Average fiber length

The fiber was observed and photographed by means of an electron microscope. As for the photographed fiber, the length was measured for 100 fibers. The average value of the lengths of all fibers measured was taken as an average fiber length.

No accurate measurement was conducted for fibers having a length of 200 $\mu$m or longer.

(3) Bulk density

The bulk density was measured by the following procedure.

(i) The mass (m) of about 100g of the sample was measured to 0.5g by means of a direct reading balance.
(ii) The sample was put in a metallic cylinder having an inner diameter of 150 mm. By using a metallic weight (mass: 8.83 kg) that slides along the inner side of this cylinder, a load of 86.6N is applied from above.
(iii) After the lapse of 5 minutes or longer, the volume (V) of the sample is obtained.
(iv) The density is calculated by the following formula, and rounded to the nearest whole number.

$$\rho = m/V$$

(in the formula, $\rho$ is the density (kg/cm$^3$), m is the mass (kg) and V is the volume (m$^3$).

(4) Average fiber diameter

The fiber was observed and photographed by means of an electron microscope. As for the photographed fiber, the diameter was measured for 400 or more fibers. The average value of the diameters of all fibers measured was taken as an average fiber length.

Examples 2 to 6

Inorganic fibers were produced and measured in the same manner as in Example 1, except for conducting the pulverizing step and the shot removing step as shown in Table 1. In the shot removing step in Example 2, the fiber was further subjected to air classification after sieving. In the shot removing step in Example 4, the fiber was further subjected to sieving after air classification. The measurement results are shown in Table 1. Examples 5 (Comparative) and 6 (Comparative) omit the pulverizing step and remove the shot solely by sieving and water sieving, respectively.

Table 1

| | Raw cotton | Example 1 | Example 2 | Example 3 | Example 4 | Example 5 | Example 6 |
|---|---|---|---|---|---|---|---|
| Pulverizing step | - | Cutter | Hammer mill | Roller press | Roller press | - | - |
| Shot removing step | - | Air classification | Sieving | Air classification | Sieving | Sieving | Water sievin |
| | - | - | Air classification | - | Air classification | - | |
| Bulk density (kg/m$^3$) | 250 | 220 | 153 | 180 | 320 | 160 | 245 |
| Shot content (45 $\mu$m remaining, wt%) | 45.0 | 21.2 | 0.5 | 0.3 | 0.1 | 21.3 | 16.7 |

(continued)

| | Raw cotton | Example 1 | Example 2 | Example 3 | Example 4 | Example 5 | Example 6 |
|---|---|---|---|---|---|---|---|
| Average fiber length ($\mu$m) | 200 or more | 101.0 | 91.8 | 72.1 | 55.0 | 120 | 200 or more |

Industrial Applicability

The inorganic fiber of the invention can be used as a heat insulating material or a friction board.

In addition, from the inorganic fiber of the invention, a processed product such as a bulk, a blanket, a block, a board, a mold, paper, a felt and an unshaped product (mastic, caster) can be obtained.

Although only some exemplary embodiments and/or examples of this invention have been described in detail above, those skilled in the art will readily appreciate that many modifications are possible in the exemplary embodiments and/or examples without materially departing from the novel teachings and advantages of this invention.

**Claims**

1.   Inorganic fibers having a composition ratio of

$SiO_2$          66 to 82 wt%;
CaO          10 to 34 wt%;
MgO          0 to 3 wt%;
$Al_2O_3$          0 to 5 wt%;

the total of $SiO_2$, CaO, MgO and $Al_2O_3$ being 98 wt% or more, and comprising 1 wt% or less of shots each having a diameter of 45 $\mu$m or more.

2.   Inorganic fibers according to claim 1 having an average fiber length of 10 $\mu$m or more.

3.   Inorganic fibers according to claim 1 or 2 having a bulk density of 50 to 500 kg/m$^3$.

4.   A method for producing inorganic fibers having a composition ratio of

$SiO_2$          66 to 82 wt%;
CaO          10 to 34 wt%;
MgO          0 to 3 wt%;
$Al_2O_3$          0 to 5 wt%;

the total of $SiO_2$, CaO, MgO and $Al_2O_3$ being 98 wt% or more, and comprising 40 wt% or less of shots each having a diameter of 45 $\mu$m or more , the method comprising:

a step of producing raw material inorganic fiber;
a step of pulverizing the raw material inorganic fiber by means of a pulverizing mill or a press; and
a step of removing shots from the pulverized raw material inorganic fiber by one or more selected from air classification, water sieving, sieving and pulverizing.

5.   The method for producing inorganic fibers according to claim 4, wherein the shots are removed from the pulverized raw material inorganic fiber by
air classification,
air classification and water sieving, or
air classification and sieving.

6.   The method for producing inorganic fibers according to claim 4 or 5, wherein the inorganic fibers have 1 wt% or less of the shots.

7. The method for producing inorganic fibers according to any of claims 4 to 6, wherein, in the step of producing raw material inorganic fiber, the raw material inorganic fiber is produced by melting a raw material by a spinning method at a temperature ranging from higher than 1700°C to 2200°C or less.

**Patentansprüche**

1. Anorganische Fasern mit einem Zusammensetzungsverhältnis von
$SiO_2$ 66 bis 82 Gew.-%;
CaO 10 bis 34 Gew.-%;
MgO 0 bis 3 Gew.-%;
$Al_2O_3$ 0 bis 5 Gew.-%;
wobei die Gesamtmenge von $SiO_2$, CaO, MgO und $Al_2O_3$ 98 Gew.-% oder mehr ist und 1 Gew.-% oder weniger an Shots mit jeweils einem Durchmesser von 45 $\mu$m oder mehr umfasst.

2. Anorganische Fasern gemäss Anspruch 1, welche eine durchschnittliche Faserlänge von 10 $\mu$m oder mehr haben.

3. Anorganische Fasern gemäss Anspruch 1 oder 2, welche eine Schüttdichte von 50 bis 500 kg/m³ haben.

4. Verfahren zur Herstellung von anorganischen Fasern, welche ein Zusammensetzungsverhältnis haben von
$SiO_2$ 66 bis 82 Gew.-%;
CaO 10 bis 34 Gew.-%;
MgO 0 bis 3 Gew.-%;
$Al_2O_3$ 0 bis 5 Gew.-%;
wobei die Gesamtmenge von $SiO_2$, CaO, MgO und $Al_2O_3$ 98 Gew.-% oder mehr ist, und 40 Gew.-% oder weniger an Shots mit jeweils einem Durchmesser von 45 $\mu$m oder mehr umfasst, wobei das Verfahren umfasst:

einen Schritt von Herstellen von Ausgangsmaterial anorganischer Faser mittels einer Mahlanlage oder einer Presse; und
einen Schritt von Entfernen von Shots aus dem pulverisierten Ausgangsmaterial anorganischer Faser durch eines oder mehr ausgewählt aus Luftklassifizierung, Wassersiebung, Siebung und Pulverisierung.

5. Verfahren zur Herstellung von anorganischen Fasern gemäss Anspruch 4, wobei die Shots vom pulverisierten Ausgangsmaterial anorganischer Faser entfernt wird durch
Luftklassifizierung,
Luftklassifizierung und Wassersiebung, oder
Luftklassifizierung und Siebung.

6. Verfahren zur Herstellung von anorganischen Fasern gemäss Anspruch 4 oder 5, wobei die anorganischen Fasern 1 Gew.-% oder weniger an Shots haben.

7. Verfahren zur Herstellung von anorganischen Fasern gemäss einem der Ansprüche 4 bis 6, wobei, im Schritt der Herstellung des Ausgangsmaterials der anorganischen Faser, das Ausgangsmaterial der anorganischen Faser durch Schmelzen eines Ausgangsmaterials durch ein Spinnverfahren bei einer Temperatur im Bereich von höher als 1700°C bis 2200°C oder weniger hergestellt wird.

**Revendications**

1. Fibres inorganiques ayant un rapport de composition de

| | |
|---|---|
| $SiO_2$ | 66 à 82 % en poids ; |
| CaO | 10 à 34 % en poids ; |
| MgO | 0 à 3 % en poids ; |
| $Al_2O_3$ | 0 à 5 % en poids ; |

la quantité totale de $SiO_2$, CaO, MgO et $Al_2O_3$ étant de 98 % en poids ou plus, et comprenant 1 % en poids ou moins de grenailles ayant chacune un diamètre de 45 $\mu$m ou plus.

2. Fibres inorganiques selon la revendication 1 ayant une longueur de fibre moyenne de 10 $\mu$m ou plus.

3. Fibres inorganiques selon la revendication 1 ou 2 ayant une densité apparente de 50 à 500 kg/m$^3$.

4. Un procédé de fabrication de fibres inorganiques ayant un rapport de composition de

| | |
|---|---|
| $SiO_2$ | 66 à 82 % en poids ; |
| CaO | 10 à 34 % en poids ; |
| MgO | 0 à 3 % en poids ; |
| $Al_2O_3$ | 0 à 5 % en poids ; |

la quantité totale de $SiO_2$, CaO, MgO et $Al_2O_3$ étant de 98 % en poids ou plus, et comprenant 40 % en poids ou moins de grenailles ayant chacune un diamètre de 45 $\mu$m ou plus, le procédé comprenant :

une étape de fabrication de fibres inorganiques brutes;
une étape de pulvérisation des fibres inorganiques brutes au moyen d'un pulvérisateur ou d'une presse; et
une étape d'élimination de grenailles des fibres inorganiques brutes pulvérisées au moyen d'un ou plusieurs choisis entre la classification pneumatique, le tamisage dans l'eau, le tamisage et la pulvérisation.

5. Le procédé de fabrication de fibres inorganiques selon la revendication 4, dans lequel les grenailles sont éliminées des fibres inorganiques brutes pulvérisées par classification pneumatique,
classification pneumatique et tamisage dans l'eau, ou
classification pneumatique et tamisage.

6. Le procédé de fabrication de fibres inorganiques selon la revendication 4 ou 5, dans lequel les fibres inorganiques comprennent 1 % en poids ou moins de grenaille.

7. Le procédé de fabrication de fibres inorganiques selon l'une quelconque des revendications 4 à 6, dans lequel dans l'étape de fabrication de fibres inorganiques brutes, les fibres inorganiques brutes sont fabriquées par fusion d'une matière brute dans un procédé de filage à une température allant de plus de 1700°C à 2200°C ou moins.

**REFERENCES CITED IN THE DESCRIPTION**

**Patent documents cited in the description**

- JP 2011016877 A
- JP S6357931 A
- US 5332699 A
- US 2004254056 A1
- EP 1725503 B1
- US 2010207298 A1
- US 5125942 A
- JP 2011077940 A